# EUROPEAN PATENT SPECIFICATION

(11) **EP 4 015 874 B1**
(45) Date of publication and mention of the grant of the patent: **26.06.2024**
(21) Application number: 20912322.3
(22) Date of filing: 31.07.2020
(51) Int. Cl.: F16H 57/02, F16H 57/028, F16H 57/03, F16H 57/032

(54) **BOX STRUCTURE OF SPEED REDUCER**
KASTENSTRUKTUR FÜR DREHZAHLMINDERER
STRUCTURE DE BOÎTE DE RÉDUCTEUR DE VITESSE

(30) Priority: 09.01.2020 CN 202010035911
(43) Date of publication of application: 22.06.2022
(73) Proprietor: Jing-Jin Electric Technologies (Heze) Co., Ltd., Heze, Shandong 274032 (CN)
(72) Inventor: YU, Ping, Beijing 100015 (CN); LIU, Xia, Beijing 100015 (CN); JIN, Lena, Beijing 100015 (CN); LI, Jianwen, Beijing 100015 (CN)
(74) Representative: Praxi Intellectual Property Milano
(86) International application number: PCT/CN2020/106233
(87) International publication number: WO 2021/139142

(56) References cited:
- EP-A1- 3 734 118
- WO-A1-2017/071819
- WO-A1-2017/071819
- WO-A1-2019/163316
- CN-A- 107 873 146
- CN-A- 111 075 910
- CN-U- 204 567 286
- CN-U- 207 543 502
- CN-U- 207 648 104
- CN-U- 208 571 839
- CN-U- 208 571 839
- JP-B2- 2 897 280
- US-A1- 2007 155 572

## Description

### TECHNICAL FIELD

The present invention relates to the field of reducer manufacturing, in particular to a reducer casing structure.

### BACKGROUND

At present, the reducer casing of automobiles is developing in the direction of light weight. However, the weight reduction will lead to the decrease of connection strength and the increase of vibration amplitude of the reducer casing, and the increased vibration amplitude of the reducer casing during operation will affect the NVH (noise, vibration, harshness) of the reducer itself or the whole power assembly.

Document WO 2017/071819 A1 discloses a gearbox, comprising a housing having at least one first and one second housing part, wherein in the respective housing part in each case at least one bearing seat is formed in order to receive a shaft of the gearbox, wherein ribs in a radiating configuration are formed on at least the bearing seat on the inner face of the respective housing part, in particular wherein the ribs extend in a radiating configuration, that is to say only in a radial direction from the central axis or axis of symmetry of the bearing seat.

Document US 2007/155572 A1 discloses a four wheel drive transmission housing, comprising: a transmission housing member, and a converter housing member including an engine mount portion on a first side of the converter housing; a transfer mount portion defining a first side joint surface on the first side; and a transmission housing mount portion defining a second side joint surface on a second side of the converter housing member. First and second reinforcing ribs are formed between the first side joint surface and the second side joint surface. The first reinforcing rib extends in a vertically extending first direction, from a rib connecting portion. The second reinforcing rib extends in a horizontally extending second direction from the rib connecting portion. The first and second reinforcing ribs are provided so as to surround a drive shaft to transmit driving power from the transmission mechanism to the transfer.

Document JP 2897280 B2 discloses a transmission casing structure, wherein attaching bolt holes 54, 56 are formed in an outer peripheral part so as to attach a right casing 6-1 and a left casing 6-2 in a box-like condition, and an attachment reinforcement 58 is provided for attaching both casings 6-1, 6-2 to a part which is inside of the bolt holes 54, 56 so as to increase the rigidity.

Document CN 208 571 839 U discloses a whole gear type roller box of connecting of high accuracy for electric actuator, including: casing (1), go up boxboard (2), motor (3), first bearing (4), second bearing (5), main shaft gear (6) and set screw (7), this gear box is topped bar through the stand and is gone up the cooperation between the surface positioned counter bore under the boxboard, can realize between boxboard and the casing the rapidogen certainly the position, then the through -hole by the screw passes on boxboard through -hole and the casing stand in proper order is connected with outside support C is whole, the motor compresses tightly fixedly through buckle and last boxboard, and easy to install, the gear box respectively is provided with a bearing in main shaft gear's both sides respectively, the rotation pressure that can effectively disperse main shaft gear, the reduction is to the wear rate of bearing, this gear box has simple structure, and reasonable design, and easy to install, long service life, etc.

### SUMMARY

In view of the above problems, the present invention provides a reducer casing structure to solve or at least partially solve the above problems.

In order to achieve the above object, the present invention adopts the following technical solutions.

The present invention provides a reducer casing structure, comprising: a front casing, a rear casing and a connecting column;
the front casing and the rear casing are connected, so that a cavity structure is form therein for accommodating a reducer;
the connecting column is provided in the cavity structure and is detachably connected between the front casing and the rear casing, the connection mode of the connecting column with the front casing and the rear casing is bolt connection, the connecting column is used to improve connection strength of the reducer casing structure, reduce casing vibration and improve NVH performance of the reducer.

Two ends of the connecting column are connected and fixed with the front casing and the rear casing respectively through one or more bolts.

Not according to the invention, the connecting column is integrally cast with one of the front casing and the rear casing, and is connected and fixed with the other through one or more bolts.

Not according to the invention, the connecting column includes at least two sections which are integrally cast with the front casing and the rear casing respectively, and the sections of the connecting column are connected and fixed to each other by one or more bolts.

Optionally, the connecting column is made of an alloy.

Optionally, the alloy is any one of alloy steel, aluminum alloy and copper alloy.

Optionally, one or more connecting columns are provided.

Optionally, the connecting column is of a stepped shape.

Optionally, the bolt is inserted into the front casing or rear casing and the connecting column from outside of the front casing or rear casing.

Optionally, the front casing and the rear casing are provided with flanges perpendicular to the front casing or the rear casing at their sealed connection, and the flanges are connected and fixed by bolts and nuts.

The above reducer casing structure has the following advantages:
The reducer casing structure according to the present invention, by providing a connecting column between the front casing and the rear casing, increases the connection strength of the reducer casing, effectively reduces the vibration of the reducer casing, reduces the deformation of the front casing and the rear casing of the reducer during operation, and improves the NVH of the reducer itself or the whole power assembly; moreover, the reducer casing structure is easy to install and occupies less space.

The above is only an overview of the technical solutions of the present invention. In order to better understand the technical means of the present invention so that it can be implemented according to the contents of the description, and in order to make the above and other objects, features and advantages of the present invention more obvious and easier to understand, the specific embodiments of the present invention are given below.

### BRIEF DESCRIPTION OF DRAWINGS

By reading the detailed description of the preferred embodiments below, various other advantages and benefits will become clear to a person of ordinary skill in the art. The drawings are only used for the purpose of illustrating the preferred embodiments, and should not be considered as a limitation to the present invention. Moreover, throughout the drawings, like reference numerals denote like components. In the drawings:
FIG. 1 is a schematic structural diagram of a reducer casing structure according to an embodiment of the present invention;
FIG. 2 is a schematic structural diagram of a reducer casing structure according to an embodiment of the present invention;
FIG. 3 is a schematic structural diagram of a reducer casing structure not according to the present invention;
FIG. 4 is a schematic structural diagram of a reducer casing structure not according to the present invention;
FIG. 5 is a schematic structural diagram of a reducer casing structure not according to the present invention;

In the drawings: 1. rear casing, 2. front casing, 3. connecting column, 4. bolt.

### DETAILED DESCRIPTION

An embodiment of the present invention provides a reducer casing structure, which comprises: a front casing 2, a rear casing 1 and a connecting column 3.

The front casing 2 and the rear casing 1 are sealedly connected to form therein a cavity structure for accommodating a reducer. The front casing 2 and the rear casing 1 are connected through the screw holes on the outside of the front casing 2 and the rear casing 1.

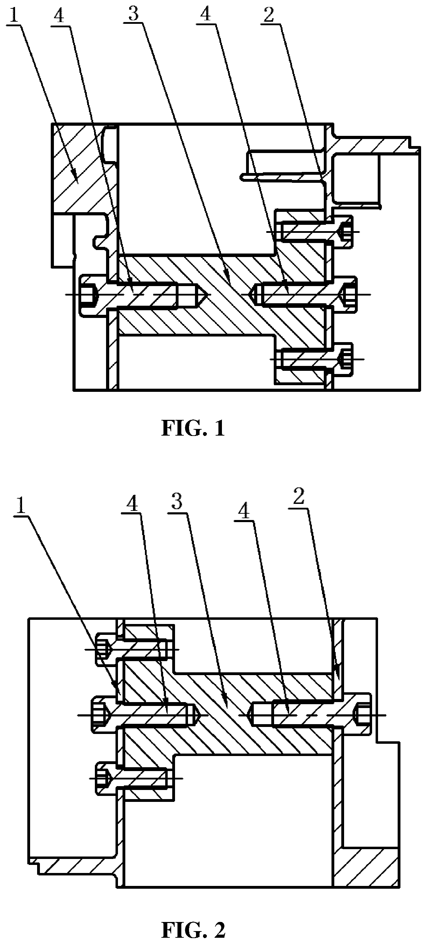

As shown in FIG. 1 to FIG. 5, the connecting column 3 is provided in the cavity structure and detachably or partially detachably connected between the front casing 2 and the rear casing 1. The connection mode of the connecting column 3 with the front casing 2 and the rear casing 1 is bolt connection or integrated casting. The connecting column 3 is used to improve the connection strength of the reducer casing structure, reduce the casing vibration and improve the NVH (noise, vibration and harshness) performance of the reducer.

The shape of the connecting column 3 may be a cylinder, a cuboid, a cube or other shape. The position of the connecting column 3 in the cavity structure may be set according to the structure of the reducer. The connecting column 3 can improve the connection strength between the front casing 2 and the rear casing 1 of the reducer, reduce the deformation of the front casing 2 and the rear casing 1 of the reducer during operation to a certain extent, and improve the NVH performance of the reducer. Moreover, the reducer casing structure is easy to install and occupies less space.

As shown in FIG. 1 and FIG. 2, two ends of the connecting column 3 are connected and fixed with the front casing 2 and the rear casing 1 respectively through one or more bolts 4. When the connecting column 3 is connected and fixed with the front casing 2 or the rear casing 1 through a plurality of bolts 4, the contact area between the connecting column 3 and the front casing 2 or the rear casing 1 is larger, which is convenient for the fixing of a plurality of bolts 4.

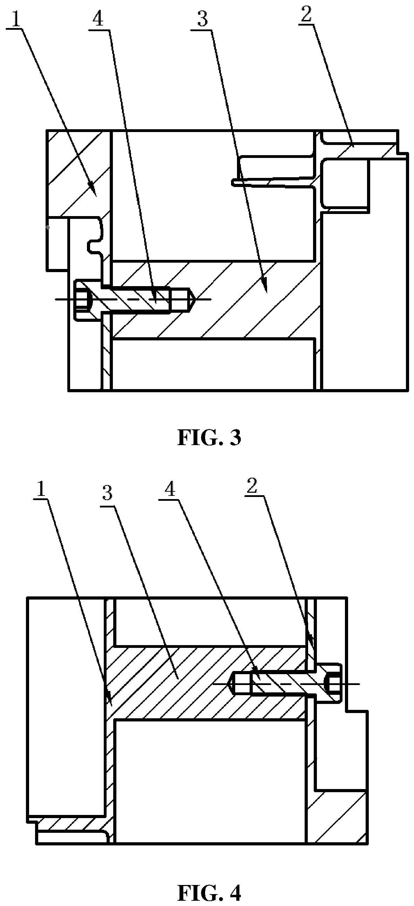

In an embodiment, not according to the present invention, as shown in FIG. 3 and FIG. 4, the connecting column 3 is integrally cast with one of the front casing 2 and the rear casing 1, and is connected and fixed with the other through one or more bolts 4.

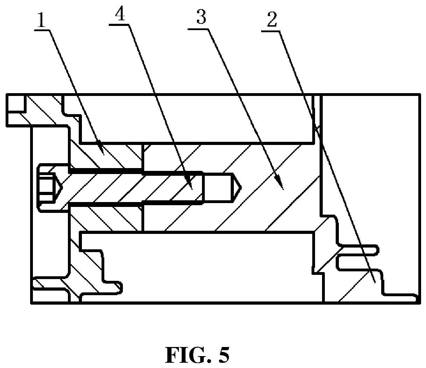

In an embodiment, not according to the present invention, as shown in FIG. 5, the connecting column 3 includes at least two sections, which are cast integrally with the front casing 2 and the rear casing 1 respectively, and the sections of the connecting column 3 are connected and fixed to each other by one or more bolts 4. When the connecting column 3 includes two sections, the two sections are cast integrally with the front casing 2 and the rear casing 1 respectively, and then the two sections of connecting column 3 are connected and fixed by bolts 4.

In an embodiment, the connecting column 3 is made of an alloy. When the connecting column 3 and the gearbox casing are integrally cast, the material of the connecting column 3 is the same as that of the gearbox casing. When the connecting column 3 and the gearbox casing are connected by bolts 4, the material of the connecting column 3 may be the same as that of the gearbox casing or be other alloys.

In an embodiment, the alloy is any one of alloy steel, aluminum alloy and copper alloy. Of course, considering the factors such as cost, connection strength and vibration reduction, the alloy steel is preferred.

In an embodiment, several connecting columns 3 may be provided. By providing a plurality of connecting columns 3 at appropriate positions in the cavity structure, the strength and vibration reduction performance of the casing structure are further improved.

In an embodiment, the connecting column 3 is of a stepped shape, which facilitates the connection of a plurality of bolts and increases the contact areas with the front and rear casings.

In an embodiment, as shown in FIGS. 1-4, the bolt 4 is inserted into the front casing 2 or the rear casing 1 and the connecting column 3 from the outside of the front casing 2 or the rear casing 1. Preferably, the bolt 4 is also provided with an anti-falling structure to prevent the bolt from falling off during the operation of the reducer.

In an embodiment, the front casing 2 and the rear casing 1 are provided with flanges perpendicular to the front casing or the rear casing at their sealed connection. The flanges are connected and fixed by bolts and nuts. The flanges can be provided at any position of the casing structure along its length and provided around the casing structure, so as to facilitate sealing and fixed connection.

In sum, the present invention provides a reducer casing structure comprising: a front casing, a rear casing and a connecting column; the front casing and the rear casing are sealedly connected to form therein a cavity structure for accommodating a reducer; the connecting column is provided in the cavity structure and is detachably or partially detachably connected between the front casing and the rear casing, the connection mode of the connecting column with the front casing and the rear casing is bolt connection or integrated casting, the connecting column is used to improve connection strength of the reducer casing structure, reduce casing vibration and improve NVH performance of the reducer. The reducer casing structure according to the present invention, by providing a connecting column between the front casing and the rear casing, increases the connection strength of the reducer casing, effectively reduces the vibration of the reducer casing, reduces the deformation of the front casing and the rear casing of the reducer during operation to a certain extent, and improves the NVH of the reducer itself or the whole power assembly; moreover, the reducer casing structure is easy to install and occupies less space.

The above are only the specific embodiments of the present invention. Under the above teaching of the present invention, those skilled in the art can make other improvements or modifications on the basis of the above embodiments. Those skilled in the art should understand that the above specific description only better explains the purpose of the present invention, and the protection scope of the present invention should be subject to the protection scope of the claims.

## Claims

1. A reducer casing structure, comprising: a front casing (2), and a rear casing (1);
the front casing (2) and the rear casing (1) are sealedly connected, so that a cavity structure is formed therein for accommodating a reducer and the reducer casing structure further comprises a connecting column (3),
the connecting column (3) is provided in the cavity structure and is detachably connected between the front casing (2) and the rear casing (1), the connection mode of the connecting column (3) with the front casing (2) and the rear casing (1) is bolt connection, the connecting column (3) is used to improve connection strength of the reducer casing structure, reduce casing vibration and improve noise, vibration, harshness, denoted as NVH performance of the reducer;
the reducer casing structure is **characterized in that**: two ends of the connecting column (3) are connected and fixed with the front casing (2) and the rear casing (1) respectively through one or more bolts (4).

2. The reducer casing structure according to claim 1, **characterized in that**: the connecting column (3) is made of an alloy.

3. The reducer casing structure according to claim 2, **characterized in that**: the alloy is any one of alloy steel, aluminum alloy and copper alloy.

4. The reducer casing structure according to any one of claims 1-3, **characterized in that**: one or more connecting columns (3) are provided.

5. The reducer casing structure according to any one of claims 1-4, **characterized in that**: the connecting column (3) is of a stepped shape.

6. The reducer casing structure according to any one of claims 1-5, **characterized in that**: the front casing (2) and the rear casing (1) are provided with flanges perpendicular to the front casing (2) or the rear casing (1) at their sealed connection, and the flanges are connected and fixed by bolts (4) and nuts.

## Patentansprüche

1. Eine Reduziergehäusestruktur, umfassend: ein vorderes Gehäuse (2) und ein hinteres Gehäuse (1);
das vordere Gehäuse (2) und das hintere Gehäuse (1) sind abgedichtet verbunden, so dass darin eine Hohlraumstruktur zur Aufnahme eines Reduzierstücks gebildet wird, und die Reduziergehäusestruktur umfasst ferner eine Verbindungssäule (3),
die Verbindungssäule (3) ist in der Hohlraumstruktur vorgesehen und ist lösbar zwischen dem vorderen Gehäuse (2) und dem hinteren Gehäuse (1) verbunden, die Verbindungsart der Verbindungssäule (3) mit dem vorderen Gehäuse (2) und dem hinteren Gehäuse (1) ist eine Schraubverbindung, die Verbindungssäule (3) wird verwendet, um die Verbindungsfestigkeit der Reduziergehäusestruktur zu verbessern, die Gehäusevibrationen zu reduzieren und Geräusch, Vibration und Härte, bezeichnet als NVH-Leistung des Reduzierstücks, zu verbessern;
die Reduziergehäusestruktur ist **dadurch gekennzeichnet, dass**: zwei Enden der Verbindungssäule (3) mit dem vorderen Gehäuse (2) beziehungsweise dem hinteren Gehäuse (1) durch einen oder mehrere Bolzen (4) verbunden und befestigt sind.

2. Die Reduziergehäusestruktur gemäß Anspruch 1, **dadurch gekennzeichnet, dass**: die Verbindungssäule (3) aus einer Legierung hergestellt ist.

3. Die Reduziergehäusestruktur gemäß Anspruch 2, **dadurch gekennzeichnet, dass**:
die Legierung eine der folgenden ist: legierter Stahl, Aluminiumlegierung und
Kupferlegierung.

4. Die Reduziergehäusestruktur gemäß einem der Ansprüche 1-3 **dadurch gekennzeichnet, dass**: eine oder mehrere Verbindungssäulen (3) vorgesehen sind.

5. Die Reduziergehäusestruktur gemäß einem der Ansprüche 1-4 **dadurch gekennzeichnet, dass**: die Verbindungssäule (3) eine Stufenform aufweist.

6. Die Reduziergehäusestruktur gemäß einem der Ansprüche 1-5, **dadurch gekennzeichnet, dass**: das vordere Gehäuse (2) und das hintere Gehäuse (1) an ihrer dichten Verbindung mit Flanschen versehen sind, die senkrecht zum vorderen Gehäuse (2) oder zum hinteren Gehäuse (1) an ihrer abgedichteten Verbindung stehen, und die Flansche durch Schrauben (4) und Muttern verbunden und befestigt sind.

## Revendications

1. Une structure de boîte de réducteur de vitesse, comprenant : une boîte avant (2), et une boîte arrière (1) ;
la boîte avant (2) et la boîte arrière (1) sont reliées de manière étanche de sorte qu'une structure de cavité est formée à l'intérieur pour loger un réducteur et la structure de boîtier de réducteur comprend en outre une colonne de connexion (3),
la colonne de connexion (3) est fournie dans la structure de la cavité et est connectée de manière amovible entre la boîte avant (2) et la boîte arrière (1), le mode de connexion de la colonne de connexion (3) avec la boîte avant (2) et la boîte arrière (1) est la connexion par boulons, la colonne de connexion (3) est utilisée pour améliorer la force de connexion de la structure de la boîte du réducteur, réduire les vibrations de la boîte et améliorer le bruit, les vibrations, la rudesse, dénommés performance NVH du réducteur de Vitesse ;
la structure de boîte de réducteur de vitesse est **caractérisée par le fait que** : deux extrémités de la colonne de connexion (3) sont connectées et fixées avec la boîte avant (2) et la boîte arrière (1) respectivement par l'intermédiaire d'un ou de plusieurs boulons (4).

2. Structure de boîte de réducteur de vitesse selon la revendication 1, **caractérisée par le fait que** : la colonne de connexion (3) est réalisée en alliage.

3. Structure de boîte de réducteur de vitesse selon la revendication 2, **caractérisée par** fait que : l'alliage est l'un quelconque parmi l'acier allié, l'alliage d'aluminium et l'alliage de cuivre.

4. Structure de boîte de réducteur de vitesse selon l'une des revendications 1 à 3, **caractérisée par le fait que** : une ou plusieurs colonnes de connexion (3) sont prévues.

5. Structure de boîte de réducteur de vitesse selon l'une des revendications 1 à 4, **caractérisée par le fait que** : la colonne de connexion (3) est de forme étagée.

6. Structure de boîte de réducteur de vitesse selon l'une des revendications 1 à 5, **caractérisée par le fait que** : la boîte avant (2) et la boîte arrière (1) sont pourvues de brides perpendiculaires à la boîte avant (2) ou à la boîte arrière (1) au niveau de leur connexion étanche, et les brides sont reliées et fixées par des boulons (4) et des écrous.
